# EUROPEAN PATENT APPLICATION

(11) **EP 1 271 983 A2**
(43) Date of publication of application: **02.01.2003**
(21) Application number: 01850194.0
(22) Date of filing: 09.11.2001
(51) Int. Cl.: H04Q 7/36

(54) **Active sectorization of a cellular network**

(30) Priority: 13.06.2001 SE 0102095
(71) Applicant: A Brand New World in Sweden AB, 164 28 Kista (SE)
(72) Inventor: Zetterberg, Per, 165 76 Hässelby (SE)
(74) Representative: Hasselgren, Erik Joakim

(57) **Abstract**

The present invention relates to a device, antenna arrangement and method for feeding an antenna array, having a set of wide-beam antenna elements, comprising N input terminals for connection of N individual base-stations and M output terminals for connection to said antenna elements. The device being arranged to feed said wide-beam antenna elements so as to form N narrow-beam antenna lobes and being further arranged to establish a communication channel between the i:th base-station and the i:th antenna lobe so that signals from said i:th base-station is transmitted only in said i:th lobe and signals received from said i:th antenna lobe is only received by said i:th base-station.

## Description

### TECHNICAL FIELD

The present invention relates to an antenna arrangement, a device and a method for feeding antenna elements. More particularly the present invention relates to an antenna arrangement, a device and a method for coupling a base-station to an antenna lobe

### BACKGROUND OF THE INVENTION

Modern radio communication systems, such as GSM, W-CDMA, CDMA2000 and many others, employ the concept of cells. A cell is conceptually an area wherein all terminals are connected to the same base-station. The base-station is said to cover the cell.

As the number of subscribers increase in the cellular networks, the cells stand the risk of being congested. This is due to the fact that in a specific cell only a limited number of subscribers may communicate with the base station at any given moment. If the expected amount of subscribers in a specific cell is too large the cell has to be divided in two, or more, cells. Thus, elaborate cell planning is required to cover the land area required with cells. In rural areas few sites are necessary to cover wide areas, whereas in densely populated areas, such as inner cities, a relative large amount of sites are required to be able to cope with the massive amount of subscribers.

A telecommunication operator will naturally keep the amount of sites down, since each individual site require installation, cabling, maintenance etc.

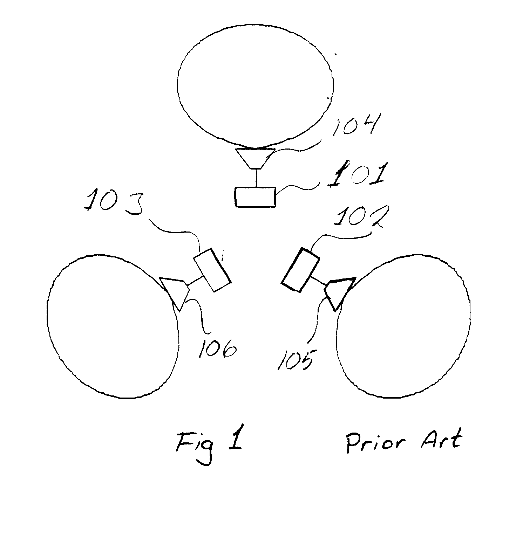

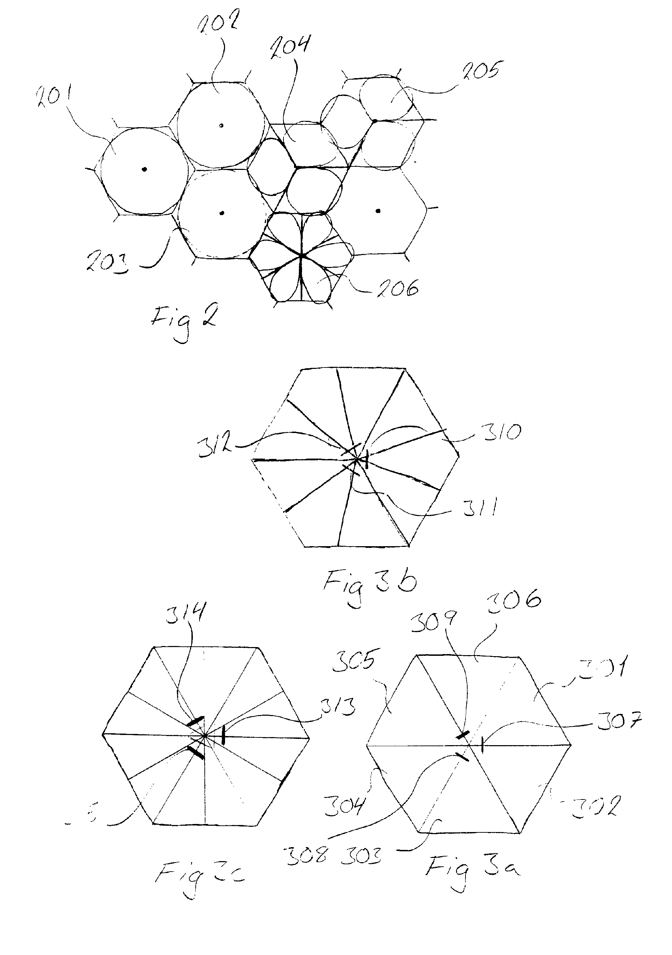

Thus, the operator put up several base-stations, often two or three, on the same site and connect the base-stations to antennas with beams covering different angular segments, as illustrated in Fig. 1, wherein three Base Stations are shown. This is known as sectorization. In this way a cell has been divided into three different sectors or cells and therefore three times the number of subscribers can be handled in the same area without any further sites being employed.

A problem associated with sectorization is that when the number of sectors becomes large the number of antennas becomes large and the sectors become narrow. However, an antenna with a narrow beam is physically wide. Thus there will be many and physically wide antennas in a sectorized site with many sectors.

This is of great concern, specifically in inner cities, where space for allocation of sites and antennas can be hard to come by or very expensive in terms of rent. Another issue is that of aesthetics, since antenna installations at times are regarded as not contributing to the aesthetic impression of, for instance a building.

### SUMMARY OF THE INVENTION

It is a main object of the present invention to provide an antenna arrangement, a device and a method that allows for an operator to achieve narrow sectorization while limiting the size of the antenna arrangement.

These objects among others are, according to a first aspect of the present invention, attained by an antenna arrangement comprising an antenna array having a set of antennas arranged side by side, each antenna in said set of antennas is individually fed from a feeding point. A beam former arrangement has input terminals for connection of at least two base-stations, and has output terminals connected to the antenna feeding points.

The beam former arrangement is arranged to feed each antenna so as to form at least two antenna lobes so that signals transmitted from a first of said at least two base-stations is transmitted only in a first of said at least two antenna lobes, and signals transmitted from a second of said at least two base-stations is transmitted only in a second of said at least two antenna lobes, and signals received from the area covered by said first lobe is received only by said first base-station, and signals received from the area covered by said second lobe is received only by said second base-station.

These objects among others are, according to a second aspect of the present invention, attained by a device, for feeding an antenna array having a set of antenna elements. Said device comprises N input terminals for connection of N individual base-stations and M output terminals for connection to said antenna elements, where N and M are integers. The device being arranged to feed said antenna element so as to form N antenna lobes and arranged to establish a communication channel between the i:th base-station and the i:th antenna lobe so that signals from said i:th base-station is transmitted only in said i:th lobe and signals received from said i:th antenna lobe is only received by said i:th base-station.

These objects among others are, according to a third aspect of the present invention, attained by a method for transmitting and receiving signals in at least two cells in a cellular radio telecommunication arrangement, comprising an antenna array having a set of antenna elements each having a feeding point. A beam former arrangement connected to said antenna element feeding points having input terminals for connection of at least two base-stations. The method comprises the following steps:

Feeding the antenna elements so as to form at least two lobes covering the at least two cells. Transmitting first signals from a first of the at least two base-stations to only a first of the lobes. Transmitting second signals from a second of the at least two base-stations to only a second of the at least two lobes. Receiving third signals from a sender located in a first of the at least two cells covered by the first lobe, by said antenna array, and forwarding the third signals to the first base-station, and receiving fourth signals from a sender located in a second of the at least two cells covered by the second lobe, by the antenna array, and forwarding the fourth signals to the second base-station.

These objects among others are, according to a fourth aspect of the present invention, attained by a cellular radio telecommunications site including three individual antenna arrangements according to the first aspect of the invention described above arranged 120° apart to cover 360°.

An advantage of the present invention is that a cell or a part of a cell can be divided into more cells each being narrower than the original cell or part of cell, while utilizing only one antenna having a relatively small size.

Further characteristics of the invention and advantages thereof will be evident from the following detailed description of embodiments of the invention.

### BRIEF DESCRIPTION OF THE DRAWINGS

The present invention will become more fully understood from the detailed description of embodiments of the present invention given herein below and the accompanying Figs. 1 to 8, which are given by way of illustration only, and thus are not limitative of the present invention.

Figure 1 shows a prior art sectorization of a cell into three sector cells.

Figure 2 shows a schematic cell plan according to a preferred embodiment of the invention wherein sectorized cells are used.

Figures 3a to 3b schematically show tree examples of sectorization of cells, according to preferred embodiments of the invention, into 60° sectors, 40° sectors and 30° sectors, respectively.

Figure 4 schematically shows a sectorized cell with three antenna arrangements and beam formers according to a preferred embodiment of the invention.

Figure 5 shows a beam former according to a preferred embodiment of the invention.

Figure 6 shows antenna beam lobes according to a preferred embodiment of the invention.

Figure 7 shows schematically a beam former according to a preferred embodiment of the invention in greater detail.

Figure 8 shows schematically a beam former according to yet a preferred embodiment of the invention in greater detail.

### PREFERRED EMBODIMENTS

In the following description, for purposes of explanation and not limitation, specific details are set forth, such as particular techniques and applications in order to provide a thorough understanding of the present invention. However, it will be apparent to one skilled in the art that the present invention may be practiced in other embodiments that depart from these specific details. In other instances, detailed descriptions of well-known methods and apparatuses are omitted so as not to obscure the description of the present invention with unnecessary details.

Figure 1 shows a prior art arrangement where three base stations 101-103 is connected to three respective antennas 104-106. Each base station and antenna combination covers a 120° wide sector, thus dividing the cell into three sectors, each sector being in fact its own cell serviced by its own base station. The arrangement in figure 1 is installed on a single site. If an operator would like to divide any, or all of the sectors into further sectors, e.g. each 120° sector into two 60° sectors, six new antennas would be required covering each 60° sector. Each antenna would be a bit wider than the old antenna since narrow-beam antennas are physically wider than wide-beam antennas. Thus, the new antennas would require more than double the space on the site.

The terms narrow-beam and wide-beam are in this context used as comparative terms only. That is, an antenna with a 60° beam is a wide-beam antenna compared to a 30° beam antenna, while it is a narrow-beam antenna compared to a 120° beam antenna.

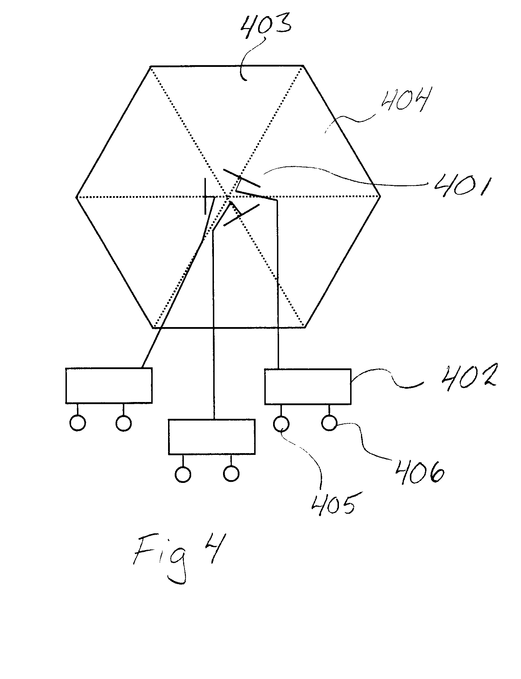

Figure 2 schematically shows part of a cellular radio telecommunications network according a preferred embodiment of the invention. A radio telecommunications site (not shown) is located in the centre of each cell. A first 201, second 202 and a third 203 cell is sparsely populate with subscribers and may thus be serviced with only one base station (not shown) at each site each having an omni-directional antenna (not shown) covering the complete 360° of the cell.

In a fourth and fifth cell, denoted 204 and 205 respectively, the subscriber population is larger and one base station is not sufficient to service all subscribers in the coverage area of the respective site. The operator has thus divided each cell into three sectors each serviced by a base station (not shown) and connected to an individual antenna (not shown).

A sixth cell 206 comprises even more subscribers and is thus divided by the operator into six sectors, each service by one base station (not shown). According to a preferred embodiment of the invention two base stations, with neighbouring sectors share one antenna. Thus, also in this cell, only three antennas are required, even though six sectors are employed. Each of the three antennas will, however, be somewhat physically wider to be able to form two different narrow-beam lobes.

In figures 3a to 3b three different divisions of a cell into a different number of sectors is depicted. Figure 3a shows a cell similar to cell 206 in figure 2. The cell is, as been described above, divided into six different sectors 301 to 306 each being 60° wide. A first antenna 307, covering 120°, is fed, as will be described in more detail below, to create two narrow-beam lobes, each being 60° wide, into sectors 301 and 302. Two base stations (not shown) are connected through a beam former (not shown) to the first antenna 307, as will be described in further detail below. Similarly, a second antenna 308 forms two narrow-beam lobes into sectors 303 and 304 and is also connected to two base stations through a second beam former. Finally, a third antenna 309 forms two narrow-beam lobes into sectors 305 and 306 and is connected to two base stations through a third beam former. Thus, with three beam formers and three antennas, six base stations are set up to communicate to one out of six sectors covered by a narrow-beam lobe. More abstractly one could say that a communication channel is established between a sector and a base stations through the beam former and associated antenna.

Figure 3b shows a cell with 8 sectors each being 40° wide. Three antennas denoted 310, 311 and 312, respectively, covers each 120° with three narrow-beam lobes of 40° widths. Thus, three base stations (not shown) are connected to each antenna through a beam former. Figure 3c, in turn, shows a cell with even narrower sectors. In this embodiment each sector is 30° wide, and thus each antenna 313, 314 and 315 forms four narrow-beam lobes, each covering an individual sector. Four base stations are connected to each beam former for communication with subscribers in a specific sector cell.

Figure 4 shows the preferred embodiment according to the invention depicted in figure 3c in more detail. An antenna arrangement 401, to be further described below, is fed from a beam former 402. The antenna arrangement is fed so as to form a first narrow-beam lobe essentially covering a first sector 403 and a second narrow-beam lobe essentially covering a second sector 404. A first base station 405 is connected to the beam former 402 for communication with subscribers in the first sector 403 and a second base station 406 is connected to the beam former 402 for communication with subscribers located in the second sector 404. Thus, one third of the cell is covered with the use of only one antenna, which is significantly smaller than two conventional antennas would have been. The remaining sectors are treated the same way.

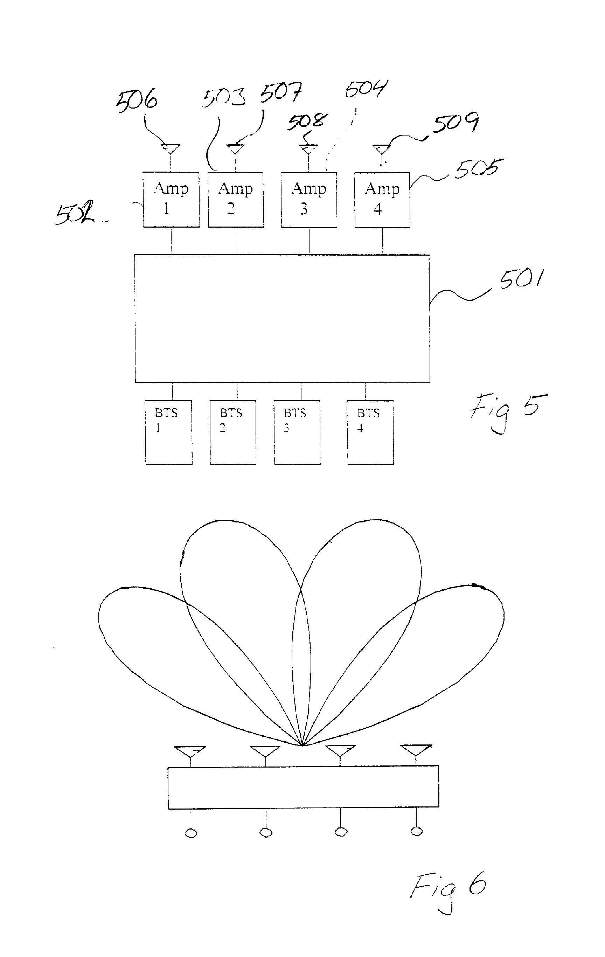

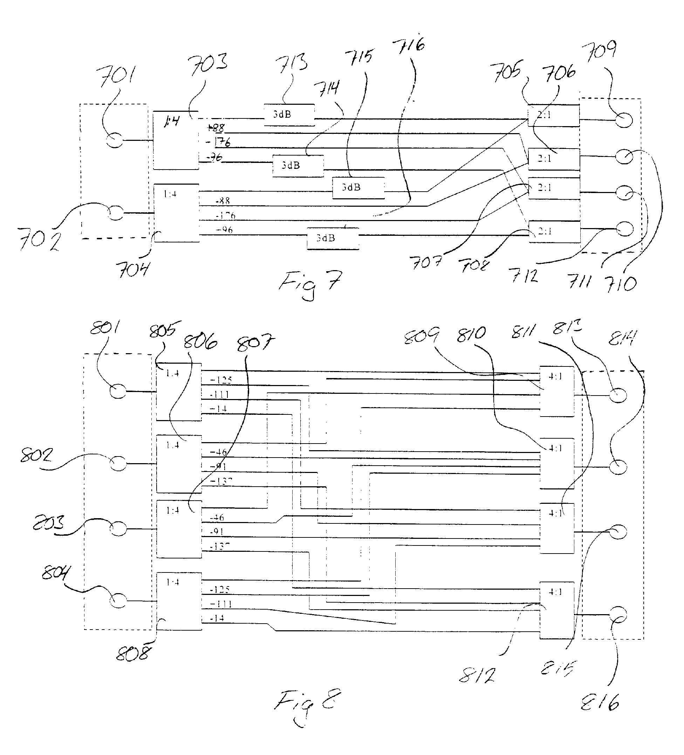

Figure 5 shows a beam former 501 according to a preferred embodiment of the invention where amplifiers 502-505 are used before the connection to each antenna element 506-509. These amplifiers are low-noise amplifier in the uplink direction (from mobile to base) and power amplifiers in the downlink direction (from base to mobile). The up- and downlink can share the same antennas by using duplex filters between the antennas and the amplifiers. By using amplifiers 502 - 505 a lossy beam former design can be used which makes for easy design, low cost (due to low power consumption) and allows for use of low-power switches to remote control antenna patterns. Each antenna element 506-509 is a wide-beam antenna. However, by controlling the phase of the signals and thus using constructive and destructive interference it is possible to feed each antenna element 506-509 so as to make the complete antenna arrangement form two, three or four different narrow-beam lobes. The embodiment having four base stations and forming four narrow-beam lobes is illustrated in figure 6. Even though four antenna elements is used in this embodiment, more antenna elements may be used. Generally, with more antenna elements, a narrower lobe as well as a more precise control over each lobe can be achieved.

Figure 7 shows a preferred embodiment of a beam former, for forming two 60° beams, according to the invention in more detail. In figure 7, a first access port 701 and a second access port 702 is arranged for connection of two base stations. Each access port is connected to a 1:4 splitter 703, 704 respectively. Each splitter has four outputs feeding the signal to four different 2:1 combiners 705, 706, 707 and 708, respectively. The output from each 2:1 combiner is connected to a respective output port 709, 710, 711 and 712, respectively, for connection to four different wide-beam antenna elements (not shown). The output signals from each 1:4 splitter is fed with different phase. Thus, the first 1:4 splitter has output signals with phases 0°, +88°, -176° and -96°, respectively, fed to each of the 2:1 combiners. The second 1:4 splitter has output signals with phases 0°, -88°, -176° and +96°, respectively, fed to each of the 2:1 combiners.

Four 3dB-attenuators 713, 714, 715 and 716, respectively, are arranged on the lines having phases 0° and -96°. The 3dB-attenuators are arranged to diminish the side-lobes, which will reduce the risk for a terminal to use the wrong lobe.

By feeding the antenna elements this way, the antenna arrangement consisting of the four wide-beam antenna elements 709-712 will form two narrow-beam lobes each being 60° wide, through interference.

Figure 8 shows a preferred embodiment of a beam former, for forming four 30° beams, according to the invention in more detail. The basic concept is in much similar to the beam former described in connection with figure 7. Four access ports 801 to 804 is for connection of four radio base stations. Each access port is connected to an individual 1:4 splitter 805-808, having four outputs each with different phase. Each splitter is in turn connected to each of four 4:1 combiners 809-812, which output is in turn connected to four wide-beam antenna elements 813-816. The phase of the outputs of the first 1:4 splitter is 0°, +125°, -111° and +14°, the second 1:4 splitter 0°, +46°, +91° and +137°, the third 0°, -46°, -91° and -137° and finally for the fourth 1:4 splitter 0°, -125°, +111° and -14°. By feeding the four wide-beam antenna elements thusly, four 30° wide beams are created and coupled to a respective base station.

It would be possible to include 3dB-attenuators, to diminish side-lobes, in arrangements having more than 2 base-stations but then more an antenna array having more than 4 antenna element would be required.

It will be obvious that the invention may be varied in a plurality of ways. For instance, may the number of wide-beam antenna elements be varied, e.g. 5 or 6 elements may be used, or the number of narrow-beam lobes formed may be varied, e.g. 6 lobes may be formed. Such variations are not to be regarded as a departure from the scope of the invention. All such modifications as would be obvious to one skilled in the art are intended to be included within the scope of the appended claims.

## Claims

1. An antenna arrangement comprising an antenna array having a set of wide-beam antennas arranged side by side,
- each wide-beam antenna in said set of antennas is individually fed from a feeding point,
**characterised in**
- a beam former arrangement having input terminals for connection of at least two base-stations,
- said beam former arrangement further having output terminals connected to said wide-beam antenna feeding points,
- said beam former arrangement being arranged to feed each wide-beam antenna so as to form at least two narrow-beam antenna lobes so that signals transmitted from a first of said at least two base-stations is transmitted only in a first of said at least two antenna lobes, and signals transmitted from a second of said at least two base-stations is transmitted only in a second of said at least two antenna lobes, and
- signals received from the area covered by said first lobe is received only by said first base-station, and signals received from the area covered by said second lobe is received only by said second base-station.

2. The antenna arrangement according to claim 1, wherein said base stations is base stations in a cellular radio telecommunication system.

3. The antenna arrangement according to claim 2, wherein each of said at least two lobes is an individual cell in said cellular radio telecommunication system.

4. The antenna arrangement according to claim 1, wherein said at least two narrow-beam lobes is two lobes each 60° wide.

5. The antenna arrangement according to claim 1, wherein said at least two lobes is three narrow-beam lobes each 40° wide.

6. The antenna arrangement according to claim 1, wherein said at least two lobes is four narrow-beam lobes each 30° wide.

7. The antenna arrangement according to claim 1, wherein attenuators are arranged between said beam former arrangement output terminals and said wide-beam antenna feeding points.

8. A cellular radio telecommunications site including three individual antenna arrangements according to any of claims 4 to 7 arranged 120° apart to cover 360°.

9. A device for feeding an antenna array, having a set of wide-beam antenna elements, comprising N input terminals for connection of N individual base-stations and M output terminals for connection to said antenna elements,
**characterised in**
- the device being arranged to feed said wide-beam antenna elements so as to form N narrow-beam antenna lobes and
- the device being further arranged to establish a communication channel between the i:th base-station and the i:th antenna lobe so that signals from said i:th base-station is transmitted only in said i:th lobe and signals received from said i:th antenna lobe is only received by said i:th base-station.

10. The device according to claim 9, wherein M is four and N is two, three or four.

11. A method for transmitting and receiving signals in at least two cells in a cellular radio telecommunication system, comprising an antenna array having a set of wide-beam antenna elements each having a feeding point, a beam former arrangement connected to said antenna element feeding points and having input terminals for connection of at least two base-stations, the method comprising the steps of:
- feeding said antenna elements so as to form at least two narrow-beam lobes each covering a respective cell of said at least two cells,
- transmitting first signals from a first of said at least two base-stations to only a first of said lobes, and
- transmitting second signals from a second of said at least two base-stations to only a second of said at least two lobes.

12. The method according to claim 11, further comprising the steps:
- receiving third signals from a sender located in a first of said at least two cells covered by said first lobe, by said antenna array, and forwarding said signals to said first base-station, and
- receiving fourth signals from a sender located in a second of said at least two cells covered by said second lobe, by said antenna array, and forwarding said signals to said second base-station.

13. The method according to claim 11, wherein said at least two narrow-beam lobes is two lobes each 60° wide.

14. The method according to claim 11, wherein said at least two lobes is three narrow-beam lobes each 40° wide.

15. The method according to claim 11, wherein said at least two lobes is four narrow-beam lobes each 30° wide.
